# EUROPEAN PATENT APPLICATION

(11) **EP 4 049 860 A1**
(43) Date of publication of application: **31.08.2022**
(21) Application number: 20879468.5
(22) Date of filing: 21.10.2020
(51) Int. Cl.: B60C 11/03, B60C 11/12

(54) **TIRE**

(30) Priority: 25.10.2019 JP 2019194644
(71) Applicant: BRIDGESTONE CORPORATION, Chuo-ku Tokyo 104-8340 (JP)
(72) Inventor: AKASHI Tokumasa, Chuo-ku, Tokyo, 104-8340 (JP)
(74) Representative: Marks & Clerk LLP
(86) International application number: PCT/JP2020/039494
(87) International publication number: WO 2021/079897

(57) **Abstract**

A tire according to this disclosure includes a rib-like or block-like land portion (100) in contact with a road surface. The land portion (100) includes a plurality of sipes (101). The end portion (103) of the sipe (101) positioned on the earlier contact side in contact with the road surface earlier as the tire rotates is opened to the side wall of the land portion (100). The end portion (102) of the sipe (101) positioned on the later contact side in contact with the road surface lately as the tire rotates terminates in the land portion (100).

## Description

### [Technical Field]

The present invention relates to a tire adapted to travel on an ice and snow roads.

### [Background Art]

For so-called a studless tire (also called a winter tire or the like) that is adapted to travel on an ice and snow roads, it is important to quickly remove the water screen that enters between the tread and the road surface, which causes slippage.

In order to remove the water screen that has entered between the tread and the road surface, a method of forming the tread with foamed rubber having many cells therein is widely used (see Patent Literature 1).

### [Prior art documents]

### [Patent Literature]

[Patent Literature 1] Japanese Patent Application Laid-Open No. 2014 -223816

### [Summary of Invention]

In order to further improve the on-ice performance of the tire adapting to travel on the ice and snow roads as described above, it is desirable to remove the water screen that has entered between the tread and the road surface by a method other than the foamed rubber.

Accordingly, an object of the present invention is to provide a tire capable of more effectively removing a water screen that has entered between the tread and the road surface.

One aspect of the present disclosure is a tire (pneumatic tire 10) including a rib-like or block-like land portion (for example, land portion 100) in contact with a road surface. The land portion includes a plurality of sipes (sipes 101), a first end portion (end portion 103), which is an end portion of the plurality of sipes positioned on an earlier contact side in contact with the road surface earlier as the tire rotates, is opened to a side wall of the land portion and a second end portion (end portion 102) , which is an end portion of the plurality of sipes positioned on a later contact side in contact with the road surface lately as the tire rotates, terminates in the land portion.

### [Brief Description of Drawings]

FIG. 1 is a partial plan view of a tread of a pneumatic tire 10.
FIG. 2 is an enlarged partial plan view of a tread 20.
FIG. 3 is an enlarged partial plan view of the tread 20 including land portions 100 A and land portions 200 A.
FIG. 4A is a plan view of a sole land portion 110 A provided on the tread 20.
FIG. 4B is a plan view of a sole land portion 110 B provided on the tread 20.
FIG. 4C is a plan view of a sole land portion 110 C provided on the tread 20.
FIG. 5A is a plan view of a sole land portion 120 A provided on the tread 20.
FIG. 5B is a plan view of a sole land portion 120 B provided on the tread 20.
FIG. 6A is a plan view of a sole land portion 130 A provided on the tread 20.
FIG. 6B is a plan view of a sole land portion 130 B provided on the tread 20.
FIG. 7A is a plan view of a sole land portion 140 A provided on the tread 20.
FIG. 7B is a plan view of a sole land portion 140 B provided on the tread 20.
FIG. 8 A is a plan view of a sole land portion 150 A provided on the tread 20.
FIG. 8B is a plan view of a sloe land portion 150 B provided on the tread 20.
FIG. 8 C is a plan view of a sole land portion 150 C provided on the tread 20.
FIG. 8 D is a plan view of a sole land portion 150 D provided on the tread 20.
FIG. 9 A is a plan view of a land portion 160 A provided on the tread 20.
FIG. 9B is a plan view of a sole land portion 160 B provided on the tread 20.
FIG. 10 A is a plan view of a sole land portion 170 A provided on the tread 20.
FIG 10 B is a plan view of a sole land portion 170 C provided on the tread 20.
FIG. 11 A is a plan view of a land portion 180 A provided on the tread 20.
FIG. 11 B is a plan view of a sole land portion 180 B provided on the tread 20.
FIG. 11 C is a plan view of a sole land portion 180 C provided on the tread 20.
FIG. 12 A is a plan view of a sole land portion 190 A provided on the tread 20.
FIG. 12 B is a plan view of a sole land portion 190 B provided on the tread 20.

### [Description of Embodiments]

Embodiments will be described below with reference to the drawings. It should be noted that the same functions and configurations are denoted by the same or similar reference numerals, and the description thereof is appropriately omitted.

### (1) Overall schematic configuration of the tire

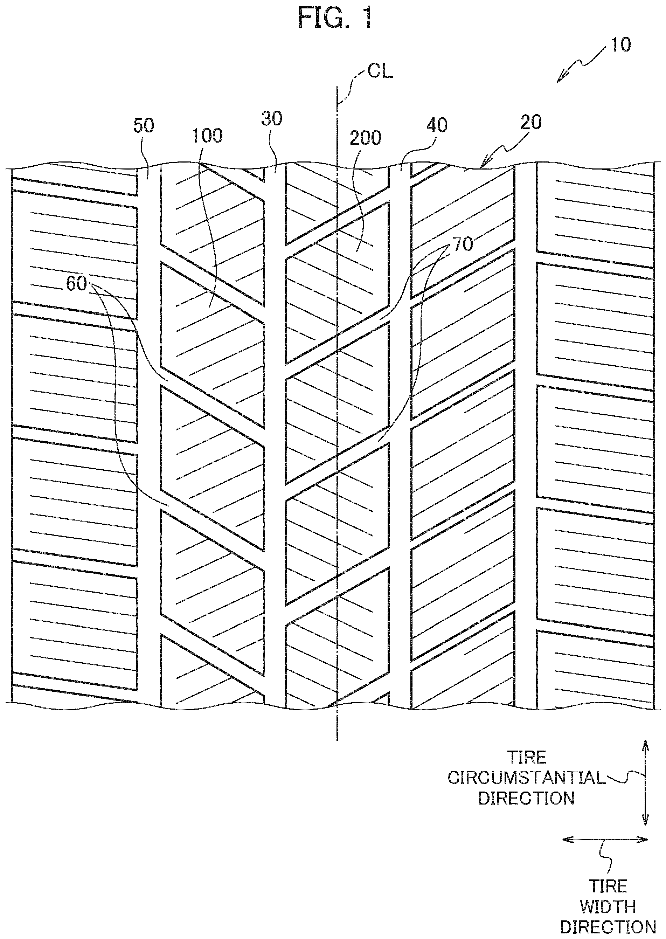

FIG. 1 is a partial plan view of a tread of a pneumatic tire 10 according to the present embodiment. As shown in FIG. 1, the pneumatic tire 10 has a tread 20 which is a portion in contact with the road surface. A plurality of circumferential direction grooves extending to a tire circumferential direction and a width direction groove extending to a tire width direction are formed on the tread 20.

Hereinafter, the circumferential direction groove means a straight, curved or zigzag groove extending at an angle of ± 45 degrees or less with respect to the tire circumferential direction, and the width direction groove means a straight, curved or zigzag groove extending at an angle of ± 45 degrees or less with respect to the tire width direction.

The pneumatic tire 10 has a plurality of sipes as described later, and is a tire adapted to travel on an ice and snow roads. Such tires are called studless tires. Instead of the studless tire, it may be called a winter tire or a snow tire.

In the present embodiment, the pneumatic tire 10 is described on the assumption that it is a studless tire for a passenger automobile (including a sport utility vehicle (SUV)), but the vehicle to be mounted is not limited to the passenger automobile.

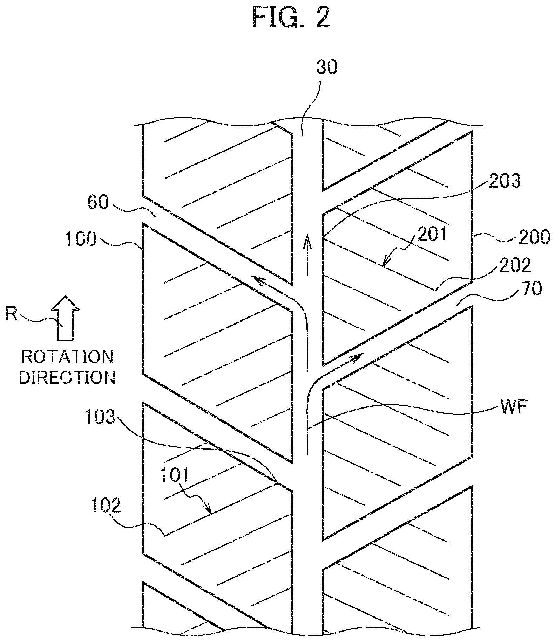

As will be described later, when the pneumatic tire 10 is mounted on the vehicle, the rotation direction R (not shown in FIG. 1, see FIG. 2) is designated. However, such designation of the rotation direction R may not be required.

The sipe is a narrow groove that closes in the ground plane of the land portion while contacting the road surface, and the opening width of the sipe when not contacting the ground is generally 0.1 mm to 1.5 mm.

As shown in FIG. 1, a circumferential direction groove 30, a circumferential direction groove 40 and a circumferential direction groove 50 are formed on the tread 20. A plurality of land portions 100 are provided between the circumferential direction groove 30 and the circumferential direction groove 50. A width direction groove 60 is formed between adjacent land portions 100 in the tire circumferential direction. That is, the land portion 100 is a block-shaped land portion separated by the circumferential direction grooves 30, the circumferential direction grooves 50, and the width direction grooves 60.

A plurality of land portions 200 are provided between the circumferential direction groove 30 and the circumferential direction groove 40. A width direction groove 70 is formed between adjacent land portions 200 in the tire circumferential direction. That is, the land portion 200 is a land portion separated by the circumferential direction groove 30, the circumferential direction groove 40, and the width direction groove 70. The land portion 200 is provided at a position including a tire equatorial line CL.

### (2) Configuration of the land portion

FIG. 2 is an enlarged partial plan view of the tread 20. Specifically, FIG. 2 shows a plurality of land portions 100 and a plurality of land portions 200 provided along the tire circumferential direction with reference to the circumferential direction groove 30.

As shown in FIG. 2, the land portions 100 and the land portions 200 include a plurality of sipes. Specifically, the land portion 100 includes a plurality of sipes 101. The land portion 200 includes a plurality of sipes 201.

In this embodiment, the sipes 101 and the sipes 201 are straight. However, the sipes 101 and the sipes 201 do not necessarily have to be straight, and may be zigzag or wavy, for example.

The sipe 101 is inclined with respect to the tire circumferential direction. The sipe 101 has an end portion 102 and an end portion 103. Similarly, the sipe 201 is inclined with respect to the tire circumferential direction. The sipe 201 has an end portion 202 and an end portion 203.

As described above, the pneumatic tire 10 rotates to the rotation direction R. Therefore, during braking of the vehicle (not shown) mounted with the pneumatic tire 10, the water on the ice entering the circumferential direction groove 30, the width direction groove 60 and the width direction groove 70 or the water generated by melting like a water flow WF and flows in the circumferential direction groove 30, the width direction groove 60 and the width direction groove 70.

Although the flow is not necessarily clear as the water flow WF shown in the figure, during braking, water tends to flow in the direction indicated by the water flow WF. Further, in the present embodiment, as described above, a studless tire is assumed, and the water flow WF may be interpreted to mean the direction in which water on the ice or water generated by melting moves relative to the land in relation to the braking operation (including the operation of the anti-lock braking system).

Here, an end portion 102 (second end portion) of the sipe 101 positioned on a later contact side in contact with the road surface lately as the tire rotates, terminates in the land portion 100. That is, the end portion 102 is positioned within the land portion 100 and does not open to a side wall of the land portion 100. In other words, the end portion 102 of the sipe 101 does not penetrate the block-shaped land portion 100.

On the other hand, an end portion 103 (first end portion), which is the end portion of the sipe 101 positioned on an earlier contact side in contact with the road surface earlier as the tire rotates, opens to the side wall of the land portion 100. That is, the end portion 103 communicates with either the circumferential direction groove 30 or the width direction groove 60. In other words, the end portion 103 of the sipe 101 penetrate the block-shaped land portion 100.

The land portion 200 has a similar configuration. Specifically, an end portion 202 (second end portion) of the sipe 201 positioned on a later contact side in contact with the road surface lately as the tire rotates, terminates in the land portion 200. That is, the end portion 202 is positioned within the land portion 200 and does not open to a side wall of the land portion 200. In other words, the end portion 202 of the sipe 201 does not penetrate the block-shaped land portion 200.

On the other hand, an end portion 203 (first end portion), which is the end portion of the sipe 201 positioned on an earlier contact side in contact with the road surface earlier as the tire rotates, opens to the side wall of the land portion 200. That is, the end portion 203 communicates with either the circumferential direction groove 30 or the width direction groove 70. In other words, the end portion 203 of the sipe 201 penetrates the block-shaped land portion 200.

Considering the relationship with the water flow WF (hereinbelow, water flow during braking is indicated unless otherwise specified) at the time of braking, the sipes 101 and 201 can be expressed as follows. The end portion 102 of the sipe 101 is positioned in a groove portion adjacent to the land portion 100, specifically, on the side opposite to the flow of water (water flow WF) flowing through the circumferential groove 30 and the width groove 60.

On the other hand, the end portion 103 of the sipe 101 is positioned on the side along the flow (water flow WF) of water flowing in the groove portion (circumferential groove 30 and width groove 60) adjacent to the land portion 100.

Here, the "side opposite to the water flow (water flow WF)" means the side at which the angle formed with the water flow WF becomes an acute angle. The "side along the water flow (water flow WF)" means the side where the angle formed with the water flow WF becomes an obtuse angle. Note that the "side opposite to the water flow (water flow WF)" and the "side along the water flow (water flow WF)" may be determined by a relative relationship between them.

Further, when determining the "side opposite to the water flow (water flow WF)" and the "side along the water flow (water flow WF)", any circumferential direction groove, that is, a predetermined circumferential direction groove, may be used as a reference.

As described above, in the present embodiment, the sipes 101 and the sipes 201 are straight, but may be zigzag or wavy. However, the sipes 101 and the sipes 201 are preferably extended from the earlier contact side (in other words, on the side of the rotation direction R) toward the later contact side without having a portion that returns to the earlier contact side (that is, the opposite side of the rotational direction R.).

As described above, the land portion 100 has a block shape. In the present embodiment, the end portions 103 of the plurality of sipes 101 are opened only at half (2) or less of the plurality (4) side walls forming the land portion 100.

Similarly, in the present embodiment, the end portions 203 of the plurality of sipes 201 open only at half (2) or less of the plurality of (4) side walls forming the land portion 200.

### (3) Pattern example

Next, an example of the pattern of the land portion according to the present embodiment will be described. The land portion pattern described below may be applied as part of the pattern of the tread 20 in place of the land portion 100 (or land portion 200) described above. Hereinafter, a part different from the above-described land portion 100 (or land portion 200) will be mainly described, and a similar part will be appropriately omitted.

### (3.1) Example 1

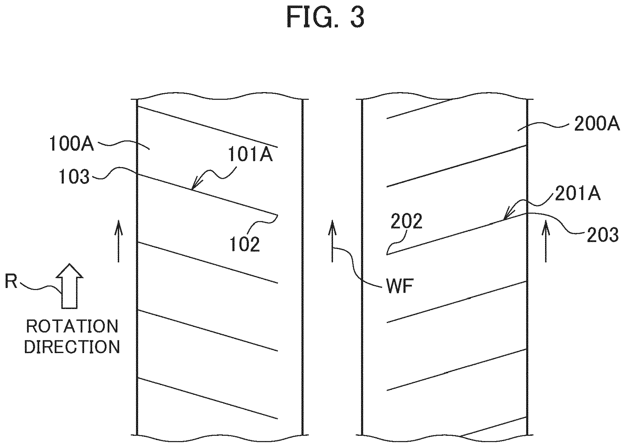

FIG. 3 is an enlarged partial plan view of the tread 20 including land portions 100 A and land portions 200 A. As shown in FIG. 3, the land portion 100 A and the land portion 200 A are rib-like. Specifically, the land portion 100 A and the land portion 200 A are not separated by the width direction groove and are continuous in the tire circumferential direction. The land portions 100 A and the land portions 200 A may not be continuous over the entire circumference in the tire circumferential direction, and a narrow groove extending to the tire width direction may be formed, or a block-shaped land portion as shown in FIG. 2 may be formed in a partial area in the tire circumferential direction.

The land portion 100 A includes a plurality of sipes 101 A. The land portion 200 A includes a plurality of sipes 201 A. The sipes 101 A and the sipes 201 A are inclined with respect to the tire circumferential direction. Note that the sipes 101 A and the sipes 201 A may be expressed as being inclined with respect to the tire width direction.

The end portion 102 of the sipe 101 A is positioned on the later contact side in contact with the road surface lately as the tire rotates, and terminates in the land portion 100 A. That is, the end portion 102 is positioned within the land portion 100 A and does not open to the side wall of the land portion 100 A.

The end portion 103 of the sipe 101 A is positioned on the earlier contact side in contact with the road surface earlier as the tire rotates, and opens to the side wall of the land portion 100 A.

In consideration of the relationship with the water flow WF, the end portion 102 of the sipe 101 A is positioned on the side opposite to the water flow WF, and the end portion 103 of the sipe 101 A is positioned on the side along the water flow WF.

Similarly, the end portion 202 of the sipe 201 A is positioned on the later contact side in contact with the road surface lately as the tire rotates, and terminates in the land portion 200 A. That is, the end portion 202 is positioned in the land portion 200 A and does not open to the side wall of the land portion 200 A.

The end portion 203 of the sipe 201 A is positioned on the earlier contact side in contact with the road surface earlier as the tire rotates, and opens to the side wall of the land portion 200 A.

In consideration of the relationship with the water flow WF, the end portion 202 of the sipe 201 A is positioned on the side opposite to the water flow WF, and the end portion 203 of the sipe 201 A is positioned on the side along the water flow WF.

### (3.2) Example 2

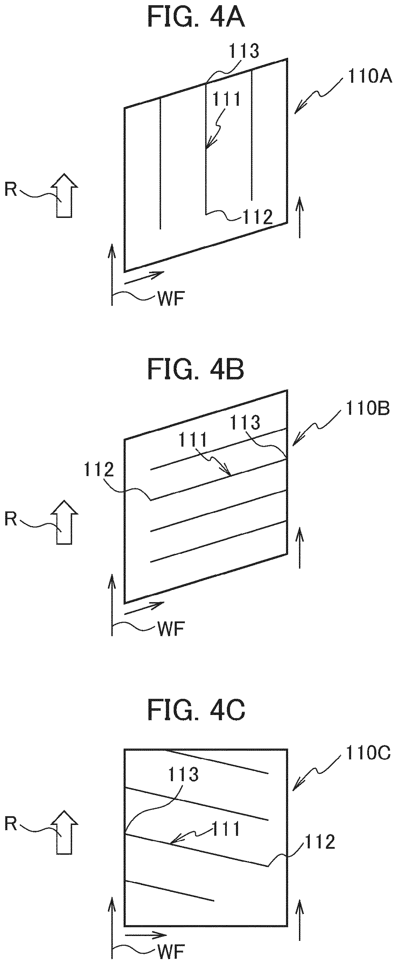

FIGs. 4 A to 4 C are plan views of sole land portions 110 A to 110 C provided on tread 20. The land portions 110 A to 110 C are square (parallelogram) shaped blocks.

As shown in FIG. 4 A, an end portion 112 of a sipe 111 formed in the land portion 110 A is positioned on the later contact side in contact with the road surface lately as the tire rotates, and terminates in the land portion 110 A.

An end portion 113 of the sipe 111 is positioned on the earlier contact side in contact with the road surface earlier as the tire rotates, and opens to the side wall of the land portion 110 A.

In consideration of the relationship with the water flow WF, the end portion 112 of the sipe 111 is positioned on the side opposite to the water flow WF, and the end portion 113 of the sipe 111 is positioned on the side along the water flow WF.

These features are similar to the sipes 111 formed in the land portions 110 B and the land portions 110 C, although the sipes 111 have different angles in the extending direction, that is, in the tire circumferential direction (or tire width direction).

### (3.3) Example 3

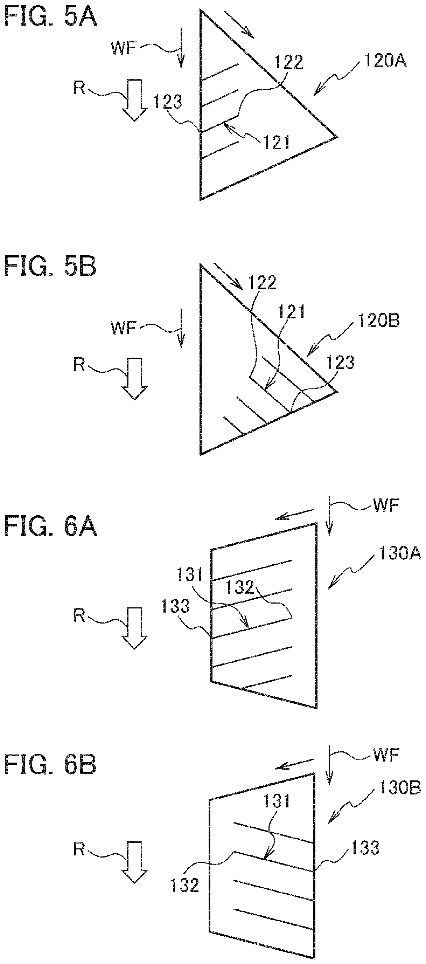

FIGs. 5 A and 5 B are plan views of the land portion 120 A and the land portion 120 B provided on the tread 20. The land portions 120 A and the land portions 120 B are triangular blocks.

As shown in FIG. 5 A, an end portion 122 of a sipe 121 formed in the land portion 120 A is positioned on the later contact side in contact with the road surface lately as the tire rotates, and terminates in the land portion 120 A.

An end portion 123 of the sipe 121 is positioned on the earlier contact side in contact with the road surface earlier as the tire rotates, and opens to the side wall of the land portion 120 A.

In consideration of the relationship with the water flow WF, the end portion 122 of the sipe 121 is positioned on the side opposite to the water flow WF, and the end portion 123 of the sipe 121 is positioned on the side along the water flow WF.

The sipes 121 formed in the land portion 120 B have the same characteristics, although the sipes 121 extend in a different direction, that is, the angle with respect to the tire circumferential direction (or the tire width direction).

### (3.4) Example 4

FIGs. 6 A and 6 B are plan views of sole land portion 130 A and the land portion 130 B provided on the tread 20. The land portion 130 A and the land portion 130 B are rectangular (trapezoidal) blocks.

As shown in FIG. 6 A, an end portion 132 of the sipe 131 formed in the land portion 130 A is positioned on the later contact side in contact with the road surface lately as the tire rotates, and terminates in the land portion 130 A.

An end portion 133 of the sipe 131 is positioned on the earlier contact side in contact with the road surface earlier as the tire rotates, and opens to the side wall of the land portion 130 A.

In consideration of the relationship with the water flow WF, the end portion 132 of the sipe 131 is positioned on the side opposite to the water flow WF, and the end portion 133 of the sipe 121 is positioned on the side along the water flow WF.

The sipes 131 formed in the land portion 130 B have the same characteristics, although the sipes 131 extend in a different direction, that is, the angle with respect to the tire circumferential direction (or the tire width direction).

### (3.5) Example 5

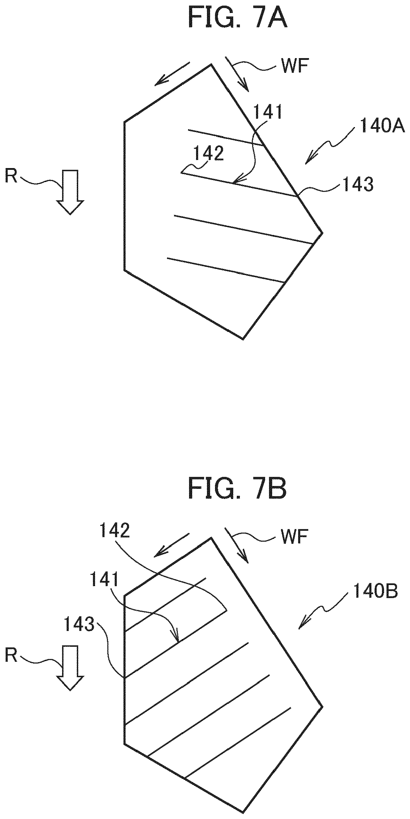

FIGs. 7 A and 7 B are plan views of a sole land portion 140 A and a land portion 140 B provided on the tread 20. The land portion 140 A and the land portion 140 B are pentagonal blocks.

As shown in FIG. 7 A, an end portion 142 of a sipe 141 formed in the land portion 140 A is positioned on the later contact side in contact with the road surface lately as the tire rotates, and terminates in the land portion 140 A.

An end portion 143 of the sipe 141 is positioned on the earlier contact side in contact with the road surface earlier as the tire rotates, and opens to the side wall of the land portion 140 A.

In consideration of the relationship with the water flow WF, the end portion 142 of the sipe 141 is positioned on the side opposite to the water flow WF, and the end portion 143 of the sipe 141 is positioned on the side along the water flow WF.

The sipes 141 formed in the land portion 140 B have the same characteristics, although the sipes 141 extend in a different direction, that is, the angle with respect to the tire circumferential direction (or the tire width direction).

### (3.6) Example 6

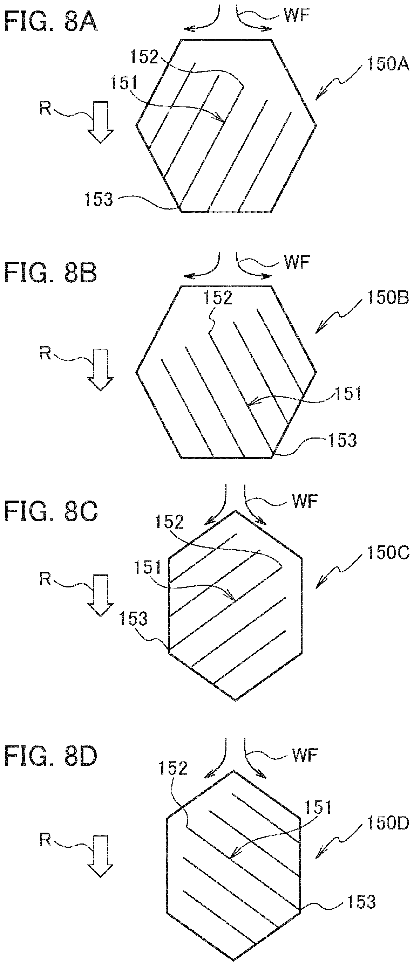

FIGs. 8 A to 8 D are plan views of land portions 150 A to 150 D provided on tread 20. The land portions 150 A to 150 D are hexagonal blocks.

As shown in FIG. 8 A,an end portion 152 of a sipe 151 formed in the land portion 150 A is positioned on the later contact side in contact with the road surface lately as the tire rotates, and terminates in the land portion 150 A.

An end portion 153 of the sipe 151 is positioned on the earlier contact side in contact with the road surface earlier as the tire rotates, and opens to the side wall of the land portion 150 A.

In consideration of the relationship with the water flow WF, the end portion 152 of the sipe 151 is positioned on the side opposite to the water flow WF, and the end portion 153 of the sipe 151 is positioned on the side along the water flow WF.

These features are similar to the sipes 151 formed in the land portions 150 B to 150 D, although the sipes 151 have different angles with respect to the extending direction, that is, the tire circumferential direction (or the tire width direction).

### (3.7) Example 7

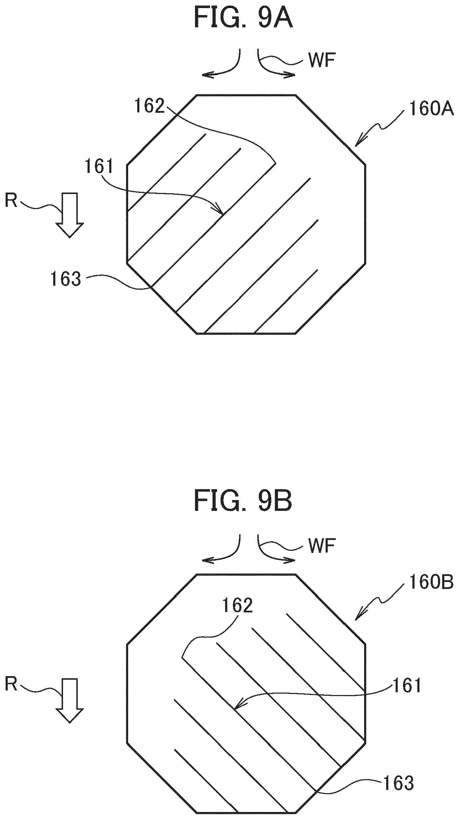

FIGs. 9 A and 9 B are plan views of a land portions 160 A and a land portion 160 B provided on the tread 20. The land portions 160 A and the land portion 160 B are octagonal blocks.

As shown in FIG. 9 A, an end portion 162 of a sipe 161 formed in the land portion 160 A is positioned on the later contact side in contact with the road surface lately as the tire rotates, and terminates in the land portion 160 A.

An end portion 163 of the sipe 161 is positioned on the earlier contact side in contact with the road surface earlier as the tire rotates, and opens to the side wall of the land portion 160 A.

In consideration of the relationship with the water flow WF, the end portion 162 of the sipe 161 is positioned on the side opposite to the water flow WF, and the end portion 143 of the sipe 161 is positioned on the side along the water flow WF.

The sipe 161 formed on the land portion 160 B has the same feature, although the sipes 163 have different angles with respect to the extending direction, that is, the tire circumferential direction (or the tire width direction).

### (3.8) Example 8

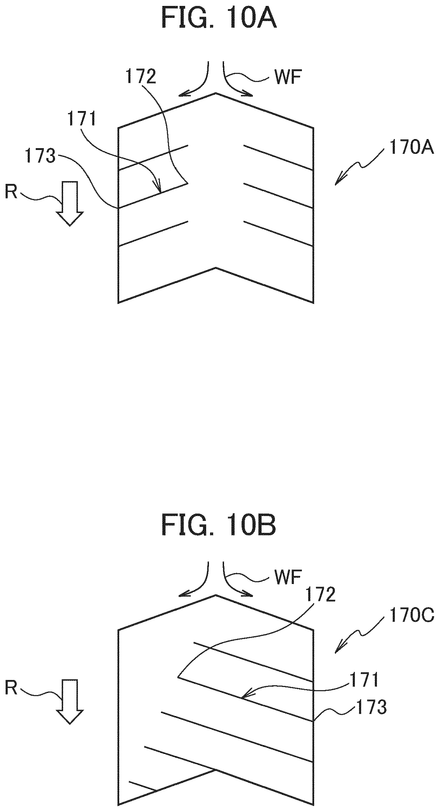

FIGs. 10 A and 10 B are plan views of a sole land portion 170 A and a sole land portion 170 C provided on the tread 20. The land portions 170 A and the land portion 170 C are so-called sagittal blocks. Concretely, the land portion 170 A and the land portion 170 C have a convex portion convex to one side in the tire circumferential direction and a concave portion concave to one side in the tire circumferential direction.

As shown in FIG. 10 A, an end portion 172 of a sipe 171 formed on the land portion 170 A is positioned on the later contact side in contact with the road surface lately as the tire rotates, and terminates in the land portion 170 A.

An end portion 173 of the sipe 171 is positioned on the earlier contact side in contact with the road surface earlier as the tire rotates, and opens to the side wall of the land portion 170 A.

In consideration of the relationship with the water flow WF, the end portion 172 of the sipe 171 is positioned on the side opposite to the water flow WF, and the end portion 173 of the sipe 171 is positioned on the side along the water flow WF.

The sipes 171 formed on the land portion 170 C have the same characteristics, although the sipes 171 extend in a different direction, that is, at different angles to the tire circumferential direction (or the tire width direction).

### (3.9) Example 9

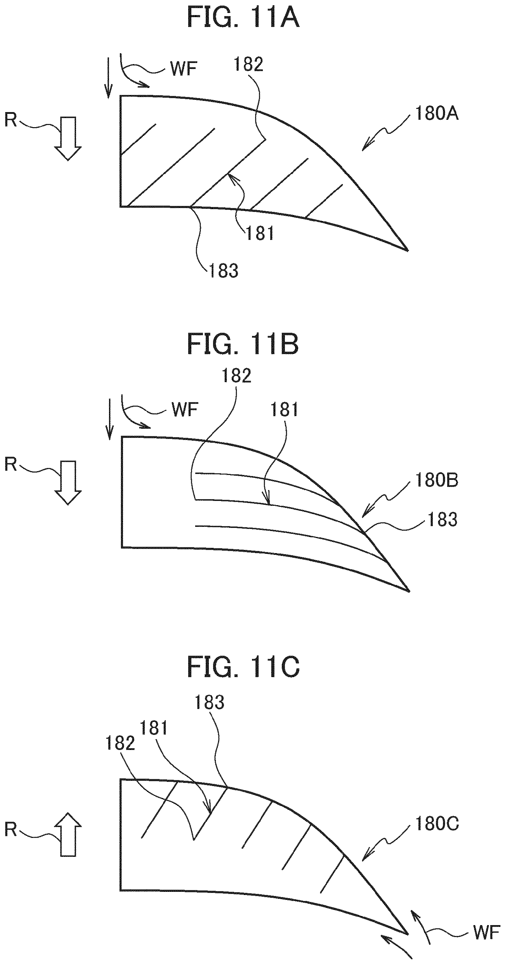

FIGs. 11 A to 11 C are plan views of the land portions 180 A to 180 C provided on the tread 20. The land portions 180 A to 180 C are wedge-shaped blocks.

As shown in FIG. 11 A, an end portion 182 of a sipe 181 formed on the land portion 180 A is positioned on the later contact side in contact with the road surface lately as the tire rotates, and terminates in the land portion 180 A.

An end portion 183 of the sipe 181 is positioned on the earlier contact side in contact with the road surface earlier as the tire rotates, and opens to the side wall of the land portion 180 A.

In consideration of the relationship with the water flow WF, the end portion 182 of the sipe 181 is positioned on the side opposite to the water flow WF, and the end portion 183 of the sipe 181 is positioned on the side along the water flow WF.

These features are similar to the sipes 181 formed in the land portions 180 B and 180 C, although the sipes 181 have different angles in the extending direction, that is, in the tire circumferential direction (or tire width direction). Note that the rotational direction R (water flow WF) of the land portion 180 C is opposite to that of the land portions 180 A and 180 B.

### (3.10) Example 10

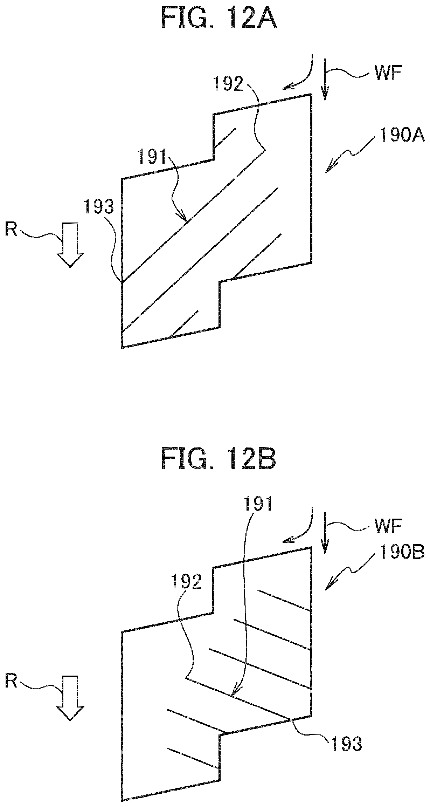

FIGs. 12 A and 12 B are plan views of a sole land portion 190 A and a sole land portion 190 B provided on the tread 20. The land portion 190 A and the land portion 190 B are blocks provided in a state where two rectangular blocks are offset in the tire circumferential direction.

As shown in FIG. 12 A, an end portion 192 of a sipe 191 formed on the land portion 190 A is positioned on the later contact side in contact with the road surface lately as the tire rotates, and terminates in the land portion 190 A.

An end portion 193 of the sipe 191 is positioned on the earlier contact side in contact with the road surface earlier as the tire rotates, and opens to the side wall of the land portion 190 A.

In consideration of the relationship with the water flow WF, the end portion 192 of the sipe 191 is positioned on the side opposite to the water flow WF, and the end portion 193 of the sipe 191 is positioned on the side along the water flow WF.

The sipes 191 formed in the land portion 190 B have the same characteristics, although the sipes 191 extend in a different direction, that is, the angle with respect to the tire circumferential direction (or the tire width direction).

### (4) Function and effects

According to the embodiment described above, the following effects are obtained. Specifically, according to the pneumatic tire 10, the end portions (first end portions) of the plurality of sipes positioned on the earlier contact side in contact with the road surface earlier as the tire rotates are terminated in the land portion. On the other hand, the end portions (second end portions) of the plurality of sipes positioned on the later contact side in contact with the road surface lately as the tire rotates are opened to the side wall of the land portion.

In other words, the end portions (first end portions) of the plurality of sipes positioned on the side opposite to the flow of water (water flow WF) flowing in the groove portion adjacent to the land portion as the tire rotates are opened to the side wall of the land portion. On the other hand, end portions (second end portions) of the plurality of sipes positioned on the side along the flow of water (water flow WF) flowing in the groove portion adjacent to the land portion as the tire rotates terminate in the land portion.

Therefore, the end portion of the sipe positioned on the side opposite to the water flow WF (same as below) at the time of braking is closed, and the infiltration of water into the land portion is effectively suppressed. On the other hand, the end portion of the sipe positioned on the side along the water flow WF is open to the circumferential direction groove or the width direction groove adjacent to the land portion, so that water entering between the land portion and the road surface can be effectively drained (released).

In other words, from the relation of the water flow WF, the side (that is, the later contact side) that is opposed to the water flow WF, in which water easily enters, suppresses the infiltration of water into the land portion by making it a closed sipe. On the other hand, the side (that is, the earlier contact side) along the water flow WF, into which water does not infiltrate, secures an escape place of water from the land portion by making it an open sipe.

Thereby, the state in which water is interposed between the land portion and the road surface can be greatly reduced. That is, according to the pneumatic tire 10, the water screen entering between the tread 20 and the road surface can be more effectively removed without using foamed rubber for the land portion. As a result, the braking performance on an ice road surface can be improved.

Further, although if all the end portions of the sipe formed on the land portion are terminated in the land portion, that is, a closed sipe, the rigidity of the land may be excessively increased, according to the pneumatic tire 10, appropriate rigidity to the land portion can be adapted by making the one end portion of the sipe becomes open, and such a state can be avoided.

As described above, the plurality of sipes may be inclined with respect to the tire circumferential direction. In this case, it is possible to achieve a well-balanced control of the infiltration of water into the land portion with respect to the water flow WF and the acceleration of the drainage of water from the land portion.

In the present embodiment, the plurality of sipes extend from the earlier contact side to the later contact side without having a portion that returns to the earlier contact side. Therefore, water entering the sipe can be effectively drained.

Further, in the present embodiment, the land portion has a block shape separated by the circumferential direction groove and the width direction groove. Further, the end portion (first end portion) of the sipe on the side (earlier contact side) along the water flow WF opens only on a half or less of the sidewalls forming the block-shaped land portion.

Therefore, the water screen entering between the tread 20 and the road surface can be effectively removed while securing the required rigidity of the land portion.

### (5)Other Embodiments

Although the contents of the present invention have been described in accordance with the embodiments described above, it is obvious to those skilled in the art that the present invention is not limited to these descriptions and that various modifications and improvements are possible.

For example, in the above-described embodiment, basically all the sipes formed on the land portion have a configuration of the later contact side end portion closed and the earlier contact side end portion open, but part of the sipes formed on the land portion do not necessarily have such a configuration. For example, both ends may be open or closed.

In the above-described embodiment, the pattern examples of the land portion have been described using Example 1 to 10, but a plurality of pattern examples may be mixed on the tread 20. For example, the tread 20 may include a quadrangular block (Example 2) and a triangular block (Example 3).

In the above-described embodiment, it has been explained that the water screen entering between the tread 20 and the road surface can be more effectively removed without using foamed rubber in the land portion, but the use of foamed rubber for the land portion constituting the tread 20 is not excluded.

As noted above, although embodiments of the present invention have been described, it should not be understood that part and drawings of the disclosure are intended to limit the invention. Various alternative embodiments, embodiments, and operational techniques will be apparent to those skilled in the art from this disclosure.

### [Reference Signs List]

10 Pneumatic tire
20 Tread
30, 40, 50 circumferential direction grooves
60, 70 width direction grooves
100,100 A, 110 A to 110 C, 120 A, 120 B, 130 A, 130 B, 140 A, 140 B 150 A to 150 D, 160 A, 160 B, 170 A, 170 C, 180 A to 180 C, 190 A, 190 B, 200, 200 A Land portions
101, 101 A, 111, 121, 131, 141, 151, 161, 171, 181, 191, 201, 201 A sipes
102, 103, 112, 113, 122, 123, 132, 133, 142, 143, 152, 153, 162, 163, 172, 173, 182, 183, 192, 193, 202, 203 End portions

## Claims

1. A tire comprising:
a rib-like or block-like land portion in contact with a road surface; wherein
the land portion includes a plurality of sipes;
a first end portion, which is an end portion of the plurality of sipes positioned on an earlier contact side in contact with the road surface earlier as the tire rotates, is opened to a side wall of the land portion; and
a second end portion, which is an end portion of the plurality of sipes positioned on a later contact side in contact with the road surface lately as the tire rotates, terminates in the land portion.

2. The tire according to claim 1, wherein the plurality of sipes are inclined to a tire circumferential direction.

3. The tire according to claim 1 or 2, wherein the plurality of sipes extend from the earlier contact side toward the later contact side without having a portion returning to the earlier contact side.

4. The tire according to any one of claims 1 to 3, wherein
the land portion is in a block shape separated by a circumferential direction groove extending to the tire circumferential direction and a width direction groove extending to the tire width direction, and
the first end portion is open only to a half or less of the sidewalls among the plurality of sidewalls forming the block-shaped land portion.

5. A tire comprising:
a rib-like or block-like land portion in contact with a road surface; wherein
the land portion includes a plurality of sipes;
a first end portion, which is an end portion of the plurality of sipes positioned on a side along a flow of water flowing through a groove portion adjacent to the land portion as the tire rotates, is opened to a side wall of the land portion; and
a second end portion, which is an end portion of the plurality of sipes positioned on a side opposite to the flow of water flowing through the groove portion adjacent to the land portion as the tire rotates, terminates in the land portion.
